# EUROPEAN PATENT APPLICATION

(11) **EP 3 903 991 A1**
(43) Date of publication of application: **03.11.2021**
(21) Application number: 19932355.1
(22) Date of filing: 13.12.2019
(51) Int. Cl.: B23K 26/342, B23K 26/21, B29C 64/153, B33Y 10/00, B33Y 80/00

(54) **THREE-DIMENSIONAL LAYERING METHOD AND OBJECT WITH THREE-DIMENSIONAL SHAPE**

(30) Priority: 11.06.2019 JP 2019108959
(71) Applicant: Mitsubishi Heavy Industries Machine Tool Co., Ltd., Ritto-shi, Shiga 520-3080 (JP); TECHNOLOGY RESEARCH ASSOCIATION FOR FUTURE ADDITIVE MANUFACTURING, Tokyo 101-0044 (JP)
(72) Inventor: WAKANA, Tomohiro, Ritto-shi, Shiga 520-3080 (JP)
(74) Representative: Studio Torta S.p.A.
(86) International application number: PCT/JP2019/049048
(87) International publication number: WO 2020/250465

(57) **Abstract**

A three-dimensional deposition method and a three-dimensional object are provided. Included are: a step of supplying a powder (P) toward an outer peripheral surface (96) of a shaft (95), irradiating the powder (P) with a laser beam (L), and sintering or melting and solidifying at least a part of the powder (P) irradiated with the laser beam (L) to form a formed layer, so as to form a three-dimensional object body (156) in which an internal space (157) communicates with an exterior through an opening (158); a step of discharging a residue such as the powder (P) in the internal space (157) from the opening (158) to an exterior; and a step of emitting the laser beam (L) toward an end surface of the opening (158) to melt and solidify the formed layer, so as to close the opening (158).

## Description

### Field

The present disclosure relates to a three-dimensional deposition method of manufacturing a three-dimensional object by deposition and a three-dimensional object manufactured by the three-dimensional deposition method.

### Background

As a technology of manufacturing a three-dimensional object, there is known a deposition shaping technology of manufacturing a three-dimensional object by irradiating a metallic powder material with a light beam. As the deposition shaping technology, for example, there is one disclosed in Patent Literature 1. The technology disclosed in Patent Literature 1 is a technology of forming a sintered layer by irradiating a powder layer formed of a metallic powder material with a light beam and manufacturing a three-dimensional object, in which a plurality of sintered layers are integrally deposited, by repeating this process.

### Citation List

### Patent Literature

Patent Literature 1: Japanese Patent Application Laid-open No. 2015-196264

### Summary

### Technical Problem

In a case where a three-dimensional object is manufactured by the deposition shaping technology, when the volume of the three-dimensional object is large, there is a desire to reduce the weight of the three-dimensional object and the amount of a powder material to be used by allowing the inside of the three-dimensional object to have a hollow shape. In the deposition shaping technology, the focal position of a light beam is set near a working surface of an object to be processed and a metallic powder material is injected to the focal position of the light beam. By so doing, the metallic powder material is melted and solidified on the working surface of the object to be processed, so that a formed layer is formed. Therefore, when a three-dimensional object having a hollow shape is manufactured by depositing a plurality of wall parts by a plurality of deposition shaping technologies, a metallic powder material not melted by the light beam may enter an internal space of the three-dimensional object. Then, when the metallic powder material remains inside the three-dimensional object having a hollow shape and the three-dimensional object is used as a mechanical component constituting a part of a device, there is a problem in that when the device is operated, the metallic powder material may cause abnormal noise or abrade an inner surface, or an imbalance may be caused in the case of a rotating body.

The present disclosure has been made to solve the problems described above and an object of the present disclosure is to provide a three-dimensional deposition method capable of improving the quality of a three-dimensional object having a hollow shape and a three-dimensional object.

### Solution to Problem

To achieve the objective described above, a three-dimensional deposition method of the present disclosure is for forming a three-dimensional object having a hollow shape by depositing a formed layer on an object to be processed, the three-dimensional deposition method comprising: a step of supplying a powder material toward a working surface of the object to be processed, irradiating the powder material with a light beam, and sintering or melting and solidifying at least a part of the powder material irradiated with the light beam to form the formed layer, so as to form a three-dimensional object body in which an internal space communicates with an exterior through an opening; a step of discharging a residue in the internal space from the opening to an exterior; and a step of emitting the light beam toward an end surface of the opening to melt and solidify the formed layer, so as to close the opening.

Therefore, when the formed layer is formed on the working surface of the object to be processed to form the three-dimensional object body in which the internal space communicates with an exterior through the opening, even though the powder material enters the internal space, a residue such as the powder material in the internal space is discharged from the opening to an exterior and then the formed layer of the opening is melted and solidified to close the opening, so that it is possible to manufacture a three-dimensional object having a hollow shape in which there is no residue in the internal space. That is, when closing the opening, the formed layer of the opening is melted and solidified to close the opening without using the powder material, so that the powder material and the like are prevented from entering the internal space. As a consequence, it is possible to improve the quality of a three-dimensional object having a hollow shape.

The three-dimensional deposition method of the present disclosure includes a step of, after the three-dimensional object body is formed, supplying the powder material toward the end surface of the opening, irradiating the powder material with the light beam, and sintering or melting and solidifying at least a part of the powder material irradiated with the light beam to form the formed layer, so as to form a lid part for closing the opening on the end surface of the opening, wherein after a residue in the internal space is discharged from the opening to an exterior, the light beam is emitted toward the lid part to melt and solidify the lid part, so as to close the opening.

Therefore, the lid part for closing the opening is formed on the end surface of the opening, and the light beam is emitted toward the lid part to melt and solidify the lid part so as to close the opening, so that it is possible to properly close the opening without using the powder material.

In the three-dimensional deposition method of the present disclosure, a gap having a predetermined length is formed between the end surface of the opening and the lid part, and emitting the light beam toward the gap to melt and solidify the formed layer, so as to close the gap.

Therefore, the light beam is emitted toward the gap between the end surface of the opening and the lid part to melt and solidify the formed layer so as to close the gap, so that it is possible to effectively close the gap by melting and solidifying the lid part in the vicinity of the gap by the light beam.

In the three-dimensional deposition method of the present disclosure, a gap having a predetermined length is formed between the end surface of the opening and the lid part, and emitting the light beam toward the lid part to melt and solidify the formed layer, so as to close the gap.

Therefore, the light beam is emitted toward the lid part to melt and solidify the formed layer so as to close the gap between the end surface of the opening and the lid part, so that it is possible to effectively close the gap by melting and solidifying the lid part by the light beam.

In the three-dimensional deposition method of the present disclosure, the three-dimensional object body includes a first wall part and a second wall part formed by depositing the formed layer on the working surface of the object to be processed, the internal space is formed by the first wall part and the second wall part, and the opening is formed by an end of the first wall part and an end of the second wall part.

Therefore, the three-dimensional object body is formed by the first wall part and the second wall part and the internal space and the opening are formed, so that it is possible to simplify the manufacturing of a three-dimensional object.

In the three-dimensional deposition method of the present disclosure, discharging the residue in the internal space from the opening to an exterior by rotating the object to be processed or supplying gas from the opening to the internal space.

Therefore, by rotating the object to be processed or supplying gas from the opening to the internal space, it is possible to easily discharge a residue in the internal space from the opening to an exterior.

In the three-dimensional deposition method of the present disclosure, after the formed layer of the opening is melted and solidified and the opening is closed, supplying the powder material toward a closed part of the opening and irradiating the powder material with the light beam, and sintering or melting and solidifying at least a part of the powder material irradiated with the light beam to form a formed layer, so as to form a covering part.

Therefore, since the covering part is formed by forming the formed layer on the closed part of the opening, the closed part of the opening is covered with the covering part, so that it is possible to improve appearance quality.

A three-dimensional object of the present disclosure comprises: a three-dimensional object body formed so that an internal space communicates with an exterior through an opening by depositing a formed layer formed by irradiating a supplied powder material with a light beam to sinter or melt and solidify at least a part of the powder material; a closed part that closes the opening by melting and solidifying the formed layer of the opening; and a covering part formed to cover the closed part by depositing the formed layer formed by irradiating the supplied powder material with the light beam to sinter or melt and solidify at least a part of the powder material.

Therefore, the formed layer of the opening of the three-dimensional object body is closed by the melted and solidified closed part, so that the powder material and the like are prevented from entering the internal space. As a consequence, it is possible to improve the quality of a three-dimensional object having a hollow shape.

### Advantageous Effects of Invention

According to a three-dimensional deposition method and a three-dimensional object of the present disclosure, it is possible to improve the quality of a three-dimensional object having a hollow shape.

### Brief Description of Drawings

FIG. 1 is a schematic view illustrating a three-dimensional deposition device of the present embodiment.
FIG. 2 is a longitudinal sectional view illustrating an example of a front end of a deposition head.
FIG. 3 is a schematic view illustrating a configuration of a control device.
FIG. 4 is a schematic view illustrating a method of manufacturing a first wall part by the three-dimensional deposition device.
FIG. 5 is a schematic view illustrating a method of manufacturing a base portion of a second wall part by the three-dimensional deposition device.
FIG. 6 is a schematic view illustrating a method of manufacturing an intermediate portion of the second wall part by the three-dimensional deposition device.
FIG. 7 is a schematic view illustrating a method of manufacturing a front end of a second wall part by the three-dimensional deposition device.
FIG. 8 is a schematic view illustrating a method of manufacturing a lid part by the three-dimensional deposition device.
FIG. 9 is a schematic view illustrating a method of discharging a residue.
FIG. 10 is a schematic view illustrating a method of melting the lid part by the three-dimensional deposition device.
FIG. 11 is a schematic view illustrating a state in which the lid part is melted to close an opening.
FIG. 12 is a schematic view illustrating a modification of a method of melting the lid part by the three-dimensional deposition device.
FIG. 13 is a schematic view illustrating a modification of a state in which the lid part is melted to close the opening.
FIG. 14 is a schematic view illustrating a method of manufacturing a covering part by the three-dimensional deposition device.
FIG. 15 is a schematic view illustrating a manufactured three-dimensional object.
FIG. 16 is a flowchart illustrating a three-dimensional deposition method.

### Description of Embodiments

Hereinafter, a preferred embodiment of the disclosure will be described in detail with reference to the accompanying drawings. Further, the disclosure is not limited to the embodiment. Then, when there are a plurality of embodiments, a combination of the embodiments may be employed.

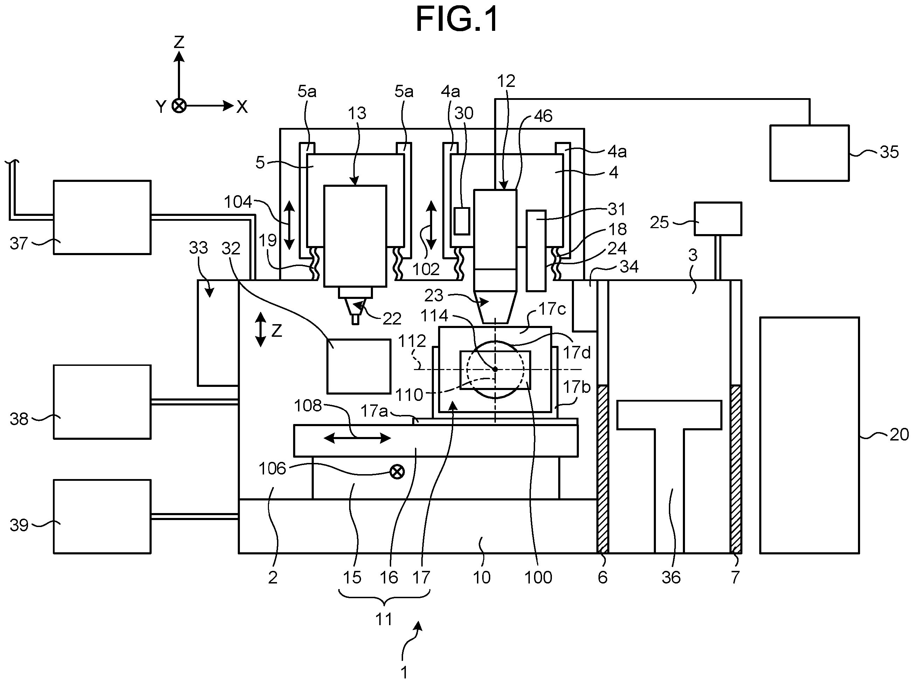

FIG. 1 is a schematic diagram illustrating a three-dimensional deposition device 1 of an embodiment. Here, in the embodiment, one direction within a horizontal plane will be set as an X-axis direction, a direction orthogonal to the X-axis direction within the horizontal plane will be set as a Y-axis direction, and a direction (a vertical direction) orthogonal to each of the X-axis direction and the Y-axis direction will be set as a Z-axis direction.

As illustrated in FIG. 1, a three-dimensional deposition device 1 is a device that manufactures a three-dimensional object on a base unit 100. The base unit 100 is a base member on which the three-dimensional object is formed. The base unit 100 is carried to a predetermined position of the three-dimensional deposition device 1, so that the three-dimensional object is formed on a working surface thereof. The base unit 100 of the embodiment is a plate-shaped member. Further, the base unit 100 is not limited thereto. As the base unit 100, a base member of the three-dimensional object may be used or a member adding the three-dimensional object may be used. A member corresponding to a component or a product, by forming the three-dimensional object at a predetermined position, may be used as the base unit 100.

The three-dimensional deposition device 1 includes a three-dimensional deposition chamber 2, a spare chamber 3, a deposition head accommodation chamber 4, a machining unit accommodation chamber 5, a bed 10, a table unit 11, a deposition head 12, a machining unit 13, a control device 20, a shape measurement unit 30, a heating head 31, a device measurement unit 32, a tool exchange unit 33, a nozzle exchange unit 34, a powder introduction unit 35, a base movement unit 36, an air discharge unit 37, a gas introduction unit 38, and a powder collection unit 39.

The three-dimensional deposition chamber 2 is a casing (a chamber) in which a part other than a designed communication part such as a connection pipe is sealed from the outside. Additionally, the designed communication part is provided with a valve that switches a sealed state and an opened state. If necessary, the three-dimensional deposition chamber 2 can be sealed. The three-dimensional deposition chamber 2 includes therein the bed 10, the table unit 11, the deposition head 12, a part of the machining unit 13, a part of the heating head 31, the device measurement unit 32, the tool exchange unit 33, and the nozzle exchange unit 34.

The spare chamber 3 is provided adjacent to the three-dimensional deposition chamber 2. In the spare chamber 3, a part other than a designed communication part such as a connection pipe is sealed from the outside. The spare chamber 3 is formed as a decompression chamber which connects the outside and the three-dimensional deposition chamber 2 to each other. The base movement unit 36 is provided inside the spare chamber 3. Here, the spare chamber 3 is formed so that, for example, an airtight door 6 is provided at the connection part with the three-dimensional deposition chamber 2. Further, the spare chamber 3 is connected to the outside by an airtight door 7. Further, the spare chamber 3 is provided with an air discharge unit 25 which discharges air from the spare chamber 3. When the door 7 is opened, a necessary member can be carried into the spare chamber 3 from the outside. Further, when the door 6 is opened, a member can be carried between the spare chamber 3 and the three-dimensional deposition chamber 2.

The deposition head accommodation chamber 4 is provided on an upper surface of the three-dimensional deposition chamber 2 in the Z-axis direction. The deposition head accommodation chamber 4 is supported by Z-axis slide units 4a to be movable in the Z-axis direction (direction indicated by an arrow 102) with respect to the three-dimensional deposition chamber 2. A lower surface of the deposition head accommodation chamber 4 in the Z-axis direction is connected to the three-dimensional deposition chamber 2 by a bellows 18. The bellows 18 connects the lower surface of the deposition head accommodation chamber 4 in the Z-axis direction to the three-dimensional deposition chamber 2 so that the lower surface of the deposition head accommodation chamber 4 in the Z-axis direction is formed as a part of the three-dimensional deposition chamber 2. Furthermore, the three-dimensional deposition chamber 2 is formed so that an opening is formed in an area surrounded by the bellows 18. A space surrounded by the lower surface of the deposition head accommodation chamber 4 in the Z-axis direction and the bellows 18 is connected to the three-dimensional deposition chamber 2 and is sealed along with the three-dimensional deposition chamber 2. The deposition head accommodation chamber 4 supports the deposition head 12, the shape measurement unit 30, and the heating head 31. Furthermore, a part including a nozzle 23 of the deposition head 12 and a part including a front end 24 of the heating head 31 protrude toward the three-dimensional deposition chamber 2 from the lower surface of the deposition head accommodation chamber 4 in the Z-axis direction.

When the deposition head accommodation chamber 4 moves in the Z-axis direction by the Z-axis slide units 4a, the deposition head 12, the shape measurement unit 30, and the heating head 31 held therein are moved in the Z-axis direction. Furthermore, the deposition head accommodation chamber 4 is connected to the three-dimensional deposition chamber 2 through the bellows 18, so that the bellows 18 is deformed in accordance with the movement in the Z-axis direction and the sealed state between the three-dimensional deposition chamber 2 and the deposition head accommodation chamber 4 can be maintained.

The machining unit accommodation chamber 5 is provided at the upper face of the three-dimensional deposition chamber 2 in the Z-axis direction. Further, the machining unit accommodation chamber 5 is disposed adjacent to the deposition head accommodation chamber 4. The machining unit accommodation chamber 5 is supported by Z-axis slide units 5a to be movable in the Z-axis direction (a direction of an arrow 104) with respect to the three-dimensional deposition chamber 2. A lower face of the machining unit accommodation chamber 5 in the Z-axis direction is connected to the three-dimensional deposition chamber 2 by a bellows 19. The bellows 19 connects the lower face of the machining unit accommodation chamber 5 in the Z-axis direction to the three-dimensional deposition chamber 2 so that the lower face of the machining unit accommodation chamber 5 in the Z-axis direction is formed as a part of the three-dimensional deposition chamber 2. Further, the three-dimensional deposition chamber 2 is formed so that an opening is formed in an area surrounded by the bellows 19. A space surrounded by the lower face of the machining unit accommodation chamber 5 in the Z-axis direction and the bellows 19 is connected to the three-dimensional deposition chamber 2 and is sealed along with the three-dimensional deposition chamber 2. The machining unit accommodation chamber 5 supports the machining unit 13. Further, the machining unit accommodation chamber 5 is formed so that a part including a tool 22 of the machining unit 13 protrudes toward the three-dimensional deposition chamber 2 from the lower face in the Z-axis direction.

When the machining unit accommodation chamber 5 moves in the Z-axis direction by the Z-axis slide units 5a, the machining unit 13 held therein is moved in the Z-axis direction. Furthermore, the machining unit accommodation chamber 5 is connected to the three-dimensional deposition chamber 2 through the bellows 19, so that the bellows 19 is deformed in accordance with the movement in the Z-axis direction and the sealed state between the three-dimensional deposition chamber 2 and the machining unit accommodation chamber 5 can be maintained.

The bed 10 is provided at a bottom in the three-dimensional deposition chamber 2 in the Z-axis direction. The bed 10 supports the table unit 11. Various wirings, pipes, and driving assemblies are disposed on the bed 10.

The table unit 11 is disposed on an upper face of the bed 10 and supports the base unit 100. The table unit 11 includes a Y-axis slide unit 15, an X-axis slide unit 16, and a rotation table unit 17. The table unit 11 has the base unit 100 attached thereto and moves the base unit 100 on the bed 10.

The Y-axis slide unit 15 moves the X-axis slide unit 16 in the Y-axis direction (a direction of an arrow 106) with respect to the bed 10. The X-axis slide unit 16 is fixed to a member corresponding to a movable part of the Y-axis slide unit 15. The X-axis slide unit 16 moves the rotation table unit 17 in the X-axis direction (a direction of an arrow 108) with respect to the Y-axis slide unit 15. The rotation table unit 17 is fixed to a member corresponding to a movable part of the X-axis slide unit 16 and supports the base unit 100. The rotation table unit 17 is, for example, an inclined circular table and includes a fixing base 17a, a rotation table 17b, an inclination table 17c, and a rotation table 17d. The fixing base 17a is fixed to a member corresponding to a movable part of the X-axis slide unit 16. The rotation table 17b is supported by the fixing base 17a. The rotation table 17b rotates about a rotation shaft 110, which is a rotation axis, and is parallel to the Z-axis direction. The inclination table 17c is supported by the rotation table 17b. The inclination table 17c rotates about a rotation shaft 112, which is an axis, and is orthogonal to a face supporting the rotation table 17b. The rotation table 17d is supported by the inclination table 17c. The rotation table 17d rotates about a rotation shaft 114, which is an axis, and is orthogonal to a surface supporting the inclination table 17c. The rotation table 17d is used to fix the base unit 100.

In this way, the rotation table unit 17 can rotate the base unit 100 about three orthogonal axes by rotating the components thereof about the rotation shafts 110, 112, and 114. The table unit 11 moves the base unit 100 fixed to the rotation table unit 17 in the Y-axis direction and the X-axis direction by the Y-axis slide unit 15 and the X-axis slide unit 16. Further, the table unit 11 rotates the base unit 100 about three orthogonal axes by rotating the components thereof about the rotation shafts 110, 112, and 114 by the rotation table unit 17. The table unit 11 may further move the base unit 100 in the Z-axis direction.

The deposition head 12 injects a powder material toward the base unit 100, irradiates the powder material injected onto the base unit with a laser beam (light beam) to melt the powder, and solidifies the melted powder on the base unit 100 to form a formed layer. The powder which is introduced into the deposition head 12 is powder which is used as a raw material of the three-dimensional object. In the embodiment, for example, a metal material such as iron, copper, aluminum, or titanium can be used as the powder. As the powder, a material such as ceramic other than the metal material may be used. The deposition head 12 is provided at a position facing the upper face of the bed 10 in the Z-axis direction and faces the table unit 11. A lower part of the deposition head 12 in the Z-axis direction is provided with the nozzle 23. The nozzle 23 is attached to a main body 46 of the deposition head 12.

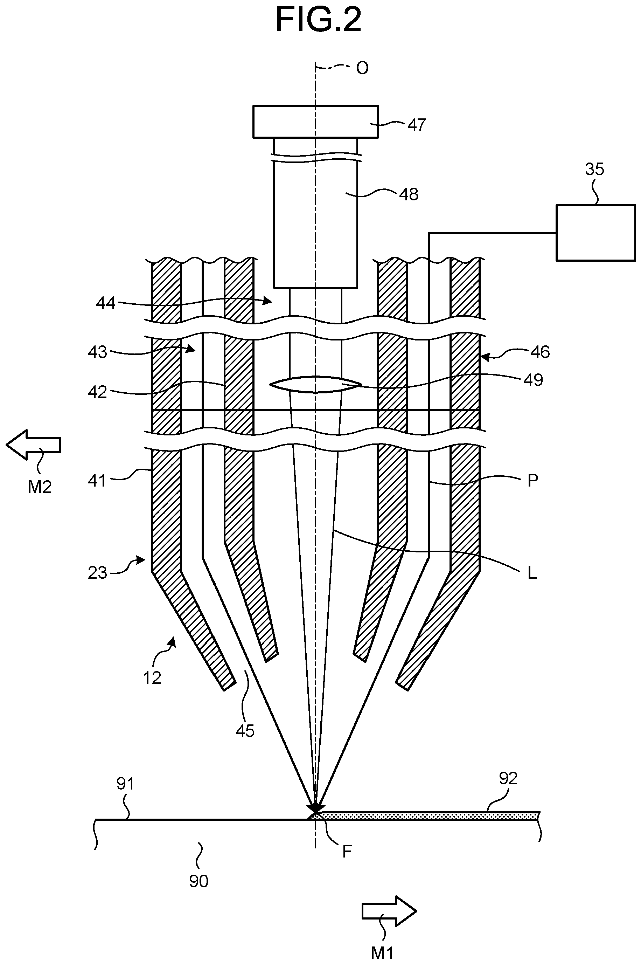

FIG. 2 is a longitudinal sectional view illustrating an example of a front end of the deposition head.

As illustrated in FIG. 2, the nozzle 23 is a double tube including an outer tube 41 and an inner tube 42 inserted into the outer tube 41. The outer tube 41 is a tubular member and is formed so that its diameter decreases toward a front end thereof (downward in the Z-axis direction). The inner tube 42 is inserted into the outer tube 41. The inner tube 42 is also a tubular member and has a shape in which its diameter decreases toward a front end thereof (downward in the Z-axis direction). In the nozzle 23, powder passages 43 through which powder (powder material) P passes are formed between an inner periphery of the outer tube 41 and an outer periphery of the inner tube 42. An inner peripheral face side of the inner tube 42 serves as a laser path 44 through which a laser beam passes. Here, the main body 46 to which the nozzle 23 is attached is a double tube similarly to the nozzle 23, and the powder passages 43 and the laser path 44 are also formed in this way. In the deposition head 12, the powder passages 43 are disposed to surround the periphery of the laser path 44. In the present embodiment, the powder passages 43 serve as powder injection units that inject the powder. In the deposition head 12, powder P introduced from the powder introduction unit 35 flows through the powder passages 43 and is injected from respective nozzle injection openings 45 which are end openings between the outer tube 41 and the inner tube 42.

The deposition head 12 injects the powder P so as to have a predetermined convergence diameter at a predetermined convergence position. The convergence diameter is the diameter of a trajectory of the powder P when the diameter of the trajectory of the injected powder P is minimized. As described above, since the diameter of the nozzle 23 decreases toward the front end thereof, the deposition head 12 injects the powder P so as to converge inward in a radiation direction. That is, the deposition head 12 injects the powder P so that the trajectory of the powder P has a predetermined convergence diameter. Furthermore, the convergence position is a position where the trajectory of the injected powder P converges.

The deposition head 12 is provided with a light source 47, an optical fiber 48, and a light concentrating unit 49. The light source 47 outputs a laser beam. The optical fiber 48 guides a laser output from the light source 47 to the laser path 44. The light concentrating unit 49 is disposed in the laser path 44 and is disposed in an optical path of the laser output from the optical fiber 48. The light concentrating unit 49 concentrates a laser beam L output from the optical fiber 48. The laser beam L which is collected by the light concentrating unit 49 is output from an end of the inner tube 42. In the deposition head 12, the light concentrating unit 49 is disposed in the main body 46, but a part or the entirety of the light concentrating unit 49 may be disposed in the nozzle 23. When a part or the entirety of the light concentrating unit 49 is disposed in the nozzle 23, a focal position can be changed to a different position by the exchange of the nozzle 23.

The deposition head 12 is provided with the laser path 44, through which the laser beam L passes, at the position of a central axis O, and is provided with a plurality of the powder passages 43 outside the laser path 44. The deposition head 12 injects the powder P from the powder passages 43 and outputs the laser beam L from the laser path 44. The powder P injected from the deposition head 12 enters an area irradiated with the laser beam L output from the deposition head 12, and is heated by the laser beam L at a focal point F of the laser beam L. The powder P irradiated with the laser beam L is melted and then reaches the base unit 100. The powder P that has reached the base unit 100 in the melted state is cooled and solidified. Accordingly, a formed layer is formed on the base unit 100.

Here, the deposition head 12 of the present embodiment uses the optical fiber 48 to guide the laser beam L output from the light source 47; however, the present disclosure is not limited to using the optical fiber 48 and may use another transmission member. Furthermore, the light concentrating unit 49 may be provided in one of or both the main body 46 and the nozzle 23. Since the deposition head 12 of the present embodiment can be processed effectively, the powder passages 43 injecting the powder P and the laser path 44 emitting the laser beam L are provided coaxially; however, the present disclosure is not limited thereto. The deposition head 12 may be formed so that an assembly for injecting the powder P and an assembly for emitting the laser beam L are provided as separate members. The deposition head 12 of the present embodiment irradiates the powder material with the laser beam, but may emit a light beam other than the laser beam as long as the powder material can be melted or sintered.

As illustrated in FIG. 1, the machining unit 13 is used to machine, for example, a formed layer or the like. The machining unit 13 is provided at a position facing the upper face of the bed 10 in the Z-axis direction and faces the table unit 11. The tool 22 is attached to a lower portion of the machining unit 13 in the Z-axis direction. Additionally, the machining unit 13 may be provided in a movable range of the base unit 100 using the table unit 11 above the bed 10 in the Z-axis direction. Here, the arrangement position is not limited to the position of the embodiment.

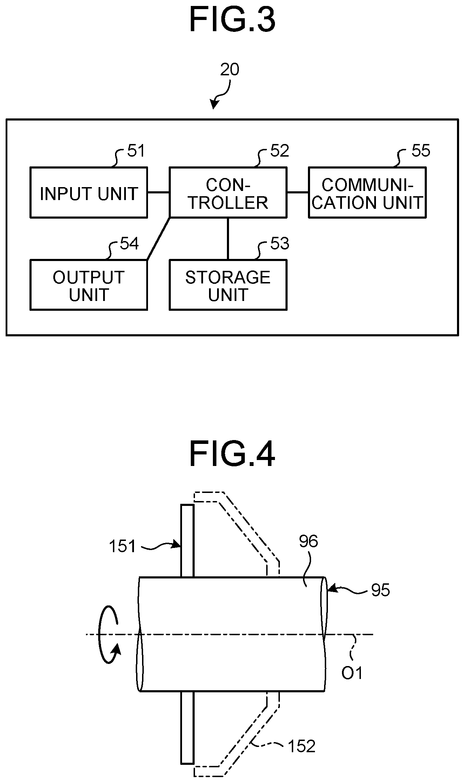

FIG. 3 is a schematic diagram illustrating a configuration of the control device 20.

As illustrated in FIG. 1, the control device 20 is electrically connected to the driving units of the components (the aforementioned bed 10, table unit 11, deposition head 12, machining unit 13, shape measurement unit 30, heating head 31, device measurement unit 32, tool exchange unit 33, nozzle exchange unit 34, powder introduction unit 35, base movement unit 36, air discharge unit 37, gas introduction unit 38, powder collection unit 39, and the like) of the three-dimensional deposition device 1, and controls the operations of the components of the three-dimensional deposition device 1. The control device 20 is installed at the outside of the three-dimensional deposition chamber 2 or the spare chamber 3. As illustrated in FIG. 3, the control device 20 includes an input unit 51, a controller 52, a storage unit 53, an output unit 54, and a communication unit 55. The input unit 51, the controller 52, the storage unit 53, the output unit 54, and the communication unit 55 are electrically connected to one another.

The input unit 51 is, for example, an operation panel. An operator inputs information or an instruction to the input unit 51. The controller 52 includes, for example, a CPU (Central Processing Unit) and a memory. The controller 52 outputs an instruction for controlling the operations of the components of the three-dimensional deposition device 1 to the components of the three-dimensional deposition device 1. Further, information and the like are input to the controller 52 from the components of the three-dimensional deposition device 1. The storage unit 53 is, for example, a storage device such as a RAM (Random Access Memory) or a ROM (Read Only Memory). The storage unit 53 stores an operation program for the three-dimensional deposition device 1 controlling the operations of the components by the controller 52 executing the program, information of the three-dimensional deposition device 1, design information of the three-dimensional object, and the like. The output unit 54 is, for example, a display. The output unit 54 displays, for example, information of the components of the three-dimensional deposition device 1. The communication unit 55 exchanges information with, for example, a communication line such as the Internet or a LAN (Local Area Network) by communicating with the communication line. Additionally, the control device 20 may include at least the controller 52 and the storage unit 53. The control device 20 may output an instruction to the components of the three-dimensional deposition device 1 if the controller 52 and the storage unit 53 are provided.

A three-dimensional deposition method by the three-dimensional deposition device 1 of the present embodiment is a method of forming a three-dimensional object having a hollow shape by depositing a formed layer on an object 90 to be processed. The three-dimensional deposition method of the present embodiment includes: a step of supplying the powder P toward a working surface of the object 90 to be processed, irradiating the powder P with the laser beam L, and sintering or melting and solidifying at least a part of the powder P irradiated with the laser beam L to form a formed layer, so as to form a three-dimensional object body in which an internal space communicates with an exterior through an opening; a step of discharging a residue in the internal space from the opening to an exterior; and a step of emitting the laser beam L toward an end surface of the opening to melt and solidify the formed layer, so as to close the opening.

Hereinafter, a method of manufacturing a general three-dimensional object by the three-dimensional deposition device 1 of the present embodiment will be described.

In the method of manufacturing a three-dimensional object by the three-dimensional deposition device 1, as illustrated in FIG. 1 and FIG. 2, the present embodiment will be described using a case of manufacturing a three-dimensional object on a working surface 91 of the object 90 to be processed. The object 90 to be processed is, for example, a metallic plate-shaped member, but the shape and material thereof may be arbitrarily set as long as a three-dimensional object is manufactured thereon. The object 90 to be processed is mounted on the base unit 100.

The control device 20 moves the base unit 100 so that the object 90 to be processed on the base unit 100 is disposed below the deposition head 12 in the Z-axis direction by the table unit 11. The control device 20 introduces the powder from the powder introduction unit 35 into the deposition head 12 and emits the laser beam L while injecting the powder P from the deposition head 12 along with the gas. The powder P is injected toward the object 90 to be processed on the base unit 100 with a predetermined convergence diameter. The laser beam L is emitted to the powder P with a predetermined spot diameter between the deposition head 12 and the object 90 to be processed. Here, the position of the spot diameter of the laser beam L in the Z-axis direction with respect to the position of the convergence diameter of the powder P in the Z-axis direction, and the spot diameter at the position of the powder P of the convergence diameter in the Z-axis direction can be controlled by, for example, the movement of the position of the light concentrating unit 49.

That is, the deposition head 12 introduces the powder P to the powder passages 43, injects the powder P from the nozzle injection openings 45, and outputs the laser beam L from the laser path 44. The focal point F of the laser beam L from the laser path 44 is set near the working surface 91 of the object 90 to be processed, and the powder P from the nozzle injection openings 45 is injected toward the focal point of the laser beam L. Therefore, the powder P injected from the deposition head 12 is heated by the laser beam L at the focal point F of the laser beam L on the working surface 91 of the object 90 to be processed. The powder P irradiated with the laser beam L is melted in the vicinity of the working surface 91 of the object 90 to be processed, and then reaches the working surface 91 of the object 90 to be processed. The powder P that has reached the working surface 91 of the object 90 to be processed in the melted state is cooled and solidified. Accordingly, a formed layer 92 is formed on the working surface 91 of the object 90 to be processed.

The control device 20 irradiates the working surface 91 of the object 90 to be processed with the laser beam L from the deposition head 12 and injects the powder P while moving the object 90 to be processed in a predetermined movement direction M1 by the table unit 11. Therefore, the formed layer 92 that is continuous to the working surface 91 of the object 90 is formed. In such a case, the processing direction by the three-dimensional deposition device is M2. The three-dimensional deposition device 1 repeats the formation of such a formed layer 92, thereby manufacturing a three-dimensional object in which a plurality of formed layers are integrally deposited.

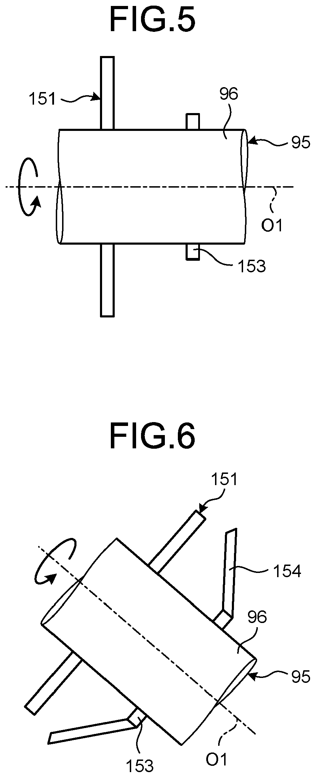

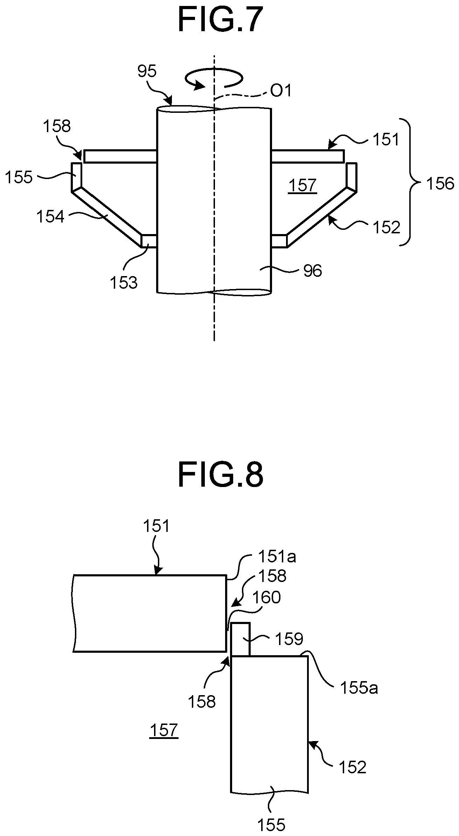

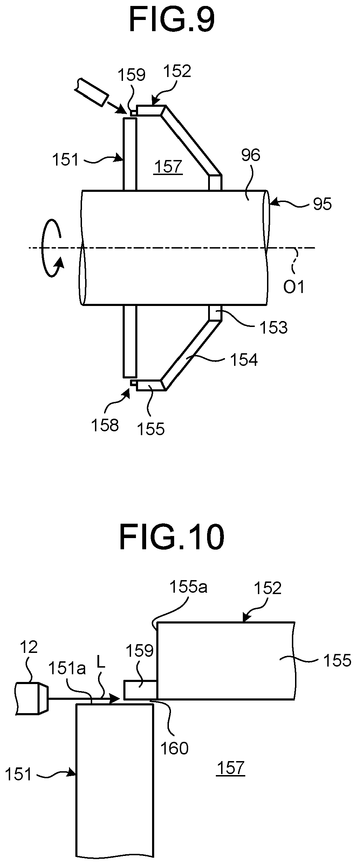

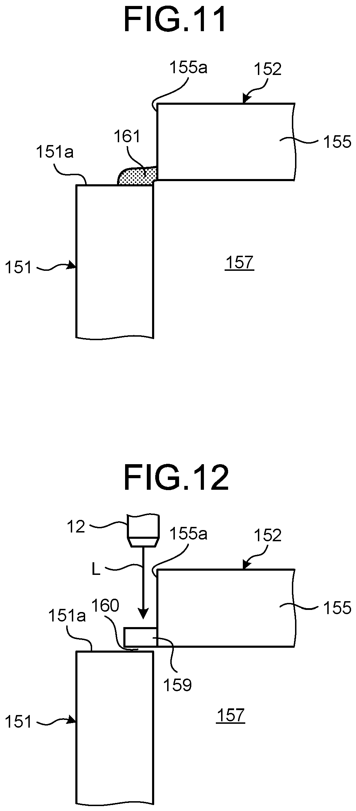

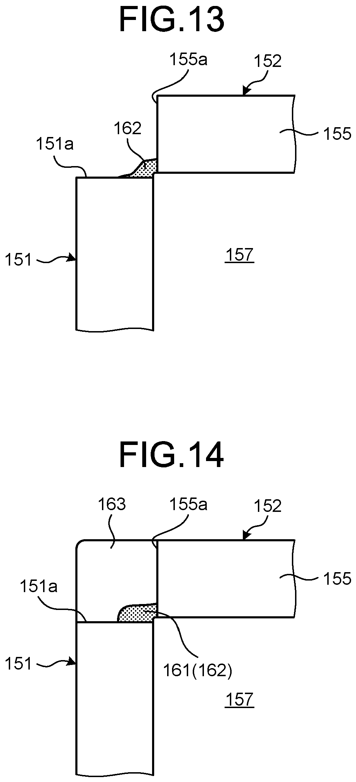

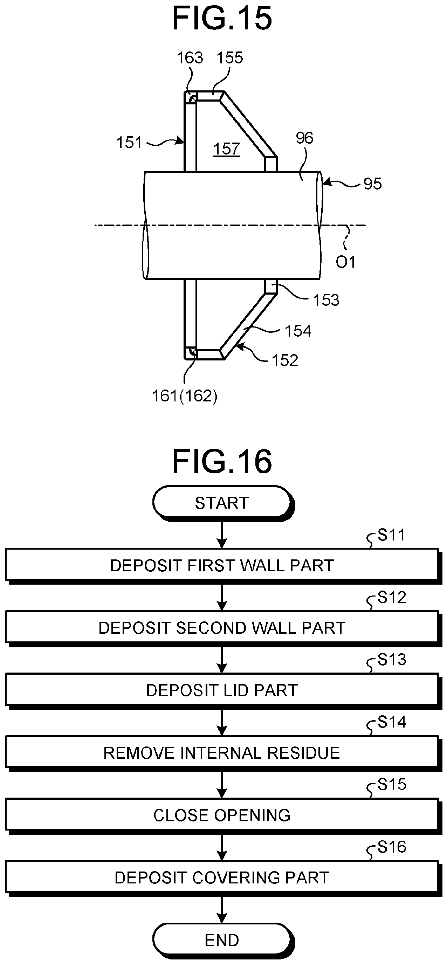

Hereinafter, a method of manufacturing a three-dimensional object having a hollow shape by the three-dimensional deposition device 1 of the present embodiment will be described in detail. FIG. 4 is a schematic view illustrating a method of manufacturing a first wall part by the three-dimensional deposition device. FIG. 5 is a schematic view illustrating a method of manufacturing a base portion of a second wall part by the three-dimensional deposition device. FIG. 6 is a schematic view illustrating a method of manufacturing an intermediate portion of the second wall part by the three-dimensional deposition device. FIG. 7 is a schematic view illustrating a method of manufacturing a front end of the second wall part by the three-dimensional deposition device. FIG. 8 is a schematic view illustrating a method of manufacturing a lid part by the three-dimensional deposition device. FIG. 9 is a schematic view illustrating a method of discharging a residue. FIG. 10 is a schematic view illustrating a method of melting the lid part by the three-dimensional deposition device. FIG. 11 is a schematic view illustrating a state in which the lid part is melted to close an opening. FIG. 12 is a schematic view illustrating a modification of a method of melting the lid part by the three-dimensional deposition device. FIG. 13 is a schematic view illustrating a modification of a state in which the lid part is melted to close the opening. FIG. 14 is a schematic view illustrating a method of manufacturing a covering part by the three-dimensional deposition device. FIG. 15 is a schematic view illustrating a manufactured three-dimensional object. FIG. 16 is a flowchart illustrating a three-dimensional deposition method.

As illustrated in FIG. 2, FIG. 4, and FIG. 16, an object to be processed is a shaft 95 having a columnar shape (or a cylindrical shape), and a formed layer is formed on an outer peripheral surface 96 which is a working surface. First, at step S11, a first wall part 151 is deposited on the outer peripheral surface 96 of the shaft 95. That is, the shaft 95 is rotated at a predetermined speed with a central axis O1 as the center of rotation, and at this time, the powder P is injected from the nozzle injection openings 45 toward the outer peripheral surface 96, and the laser beam L is output from the laser path 44. By so doing, the injected powder P is heated by the laser beam L in the vicinity of the outer peripheral surface 96, and the melted powder P reaches the outer peripheral surface. The melted powder P that has reached the outer peripheral surface 96 is cooled and solidified, so that a formed layer is formed. Since the shaft 95 is continuously rotated, the formed layer is deposited on the outer peripheral surface 96, so that the first wall part 151 having a predetermined height along a radial direction and a circumferential direction is formed on the outer peripheral surface 96 of the shaft 95.

Next, at step S12, a second wall part 152 is deposited on the outer peripheral surface 96 of the shaft 95. That is, as illustrated in FIG. 2, FIG. 5, and FIG. 16, the shaft 95 is rotated at a predetermined speed with the central axis O1 as the center of rotation, and at this time, the powder P is injected from the nozzle injection openings 45 toward the outer peripheral surface 96 axially separated from the first wall part 151 by a predetermined distance, and the laser beam L is output from the laser path 44. By so doing, the injected powder P is melted by the laser beam L and is cooled and solidified on the outer peripheral surface 96, so that a formed layer is formed. Since the shaft 95 is continuously rotated, the formed layer is deposited on the outer peripheral surface 96, so that a base portion 153 of the second wall part 152 having a predetermined height along the radial direction and the circumferential direction is formed on the outer peripheral surface 96 of the shaft 95.

When the base portion 153 is formed on the outer peripheral surface 96 of the shaft 95, the shaft 95 is inclined by a predetermined angle (for example, 45°) with respect to a horizontal line and is rotated at a predetermined speed with the central axis O1 as the center of rotation as illustrated in FIG. 2 and FIG. 6. At this time, the powder P is injected from the nozzle injection openings 45 toward the base portion 153, and the laser beam L is output from the laser path 44. By so doing, the injected powder P is melted by the laser beam L and is cooled and solidified on the base portion 153, so that a formed layer is formed. Since the shaft 95 is continuously rotated, the formed layer is deposited on the base portion 153, so that an intermediate portion 154 of the second wall part 152 having a predetermined height along the radial direction and the circumferential direction of the shaft 95 is formed.

When the intermediate portion 154 of the base portion 153 of the shaft 95 is formed, the shaft 95 is inclined by a predetermined angle (for example, 90°) with respect to the horizontal line and is rotated at a predetermined speed with the central axis O1 as the center of rotation as illustrated in FIG. 2 and FIG. 7. At this time, the powder P is injected from the nozzle injection openings 45 toward the intermediate portion 154, and the laser beam L is output from the laser path 44. By so doing, the injected powder P is melted by the laser beam L and is cooled and solidified on the intermediate portion 154, so that a formed layer is formed. Since the shaft 95 is continuously rotated, the formed layer is deposited on the intermediate portion 154, so that a front end 155 of the second wall part 152 having a predetermined height along the axial direction and the circumferential direction of the shaft 95 is formed.

By sequentially depositing the formed layer while rotating the shaft 95 at different angles, the second wall part 152 including the base portion 153, the intermediate portion 154, and the front end 155 is formed. In the second wall part 152, the base portion 153 is fixed to the outer peripheral surface of the shaft 95, the front end 155 side is bent to approach a front end of the first wall part 151, and the front end 155 is adjacent to the front end of the first wall part 151. A three-dimensional object body 156 is composed of the first wall part 151 and the second wall part 152. An internal space 157 is formed by the first wall part 151 and the second wall part 152, and an opening 158 is formed by the front end of the first wall part 151 and the front end 155 of the second wall part 152.

As illustrated in FIG. 2, FIG. 8, and FIG. 16, at step S13, an end surface of the opening 158, that is, a lid part 159 for closing the opening 158 is formed on the front end 155 of the second wall part 152. That is, the shaft 95 (see FIG. 7) is rotated at a predetermined speed with the central axis O1 as the center of rotation, and at this time, the powder P is injected from the nozzle injection openings 45 toward an end surface 155a of the front end 155 of the second wall part 152, and the laser beam L is output from the laser path 44. By so doing, the injected powder P is melted by the laser beam L and is cooled and solidified on the end surface 155a, so that a formed layer is formed. Since the shaft 95 is continuously rotated, the formed layer is deposited on the end surface 155a, so that the lid part 159 having a predetermined height along the axial direction and the circumferential direction of the shaft 95 is formed.

The lid part 159 has a width shorter than a width of the second wall part 152, that is, a width of the front end 155 of the wall part forming the lid part 159. The lid part 159 has a height shorter than a width of the first wall part 151, that is, a width of the wall part without the lid part 159 formed. When the lid part 159 is formed on the end surface 155a of the front end 155 of the second wall part 152, the lid part 159 faces the opening 158, so that a gap 160 having a predetermined length is formed between the lid part 159 and the end surface of the opening 158, that is, between the lid part 159 and an end surface 151a of the first wall part 151. Preferably, the gap 160 is smaller than a spot diameter of the laser beam L and is larger than a particle diameter of the powder P.

As illustrated in FIG. 2, FIG. 9, and FIG. 16, at step S14, a residue in the internal space 157 is discharged from the opening 158 (the gap 160) to an exterior. Since the first wall part 151, the second wall part 152, and the lid part 159 are formed by injecting the powder P from the nozzle injection openings 45 and outputting the laser beam L from the laser path 44, a part of the powder P injected from the nozzle injection openings 45 may enter the internal space 157 of the three-dimensional object body 156 without being melted. Then, by rotating the shaft 95, a residue such as the powder P in the internal space 157 is discharged from the opening 158 to an exterior by centrifugal force. Furthermore, by supplying gas (for example, air or inert gas) from the opening 158 of the three-dimensional object body 156 to the internal space 157, a residue such as the powder P in the internal space 157 is discharged from the opening 158 to an exterior.

As illustrated in FIG. 2, FIG. 10, and FIG. 16, at step S15, the shaft 95 (see FIG. 7) is rotated at a predetermined speed with the central axis O1 as the center of rotation, and the laser beam L is emitted toward the lid part 159 of the opening 158 to melt and solidify the formed layer of the lid part 159, thereby closing the opening 158. In such a case, by emitting the laser beam L toward the gap 160 from the horizontal direction, the formed layer of the lid part 159 is melted and the molten formed layer melts down to the gap 160 side below the lid part 159 as illustrated in FIG. 11. Then, the molten formed layer closes the gap 160 and is solidified to form a closed part 161, so that the gap 160 is completely closed. Furthermore, by emitting the laser beam L toward the lid part 159 from the vertical direction as illustrated in FIG. 12, the formed layer of the lid part 159 is melted and the molten formed layer melts down to the gap 160 side below the lid part 159 as illustrated in FIG. 13. Then, the molten formed layer closes the gap 160 and is solidified to form a closed part 162, so that the gap 160 is completely closed.

As illustrated in FIG. 2, FIG. 14, and FIG. 16, at step S16, the shaft 95 (see FIG. 7) is rotated at a predetermined speed with the central axis O1 as the center of rotation, and at this time, the powder P is injected from the nozzle injection openings 45 toward the end surface 151a of the front end of the first wall part 151, and the laser beam L is output from the laser path 44. By so doing, the injected powder P is melted by the laser beam L and is cooled and solidified on the end surface 151a, so that a formed layer is formed. Since the shaft 95 is continuously rotated, the formed layer is deposited on the end surface 151a, so that a covering part 163 having a predetermined height along the radial direction and the circumferential direction of the shaft 95 is formed. The covering part 163 covers the closed parts 161 and 162 and is fixed to the end surface 151a of the front end of the first wall part 151 and the surface 155a of the front end 155 of the second wall part 152. Then, an outer peripheral surface of the first wall part 151 and an outer peripheral surface of the second wall part 152 are smoothly continuous.

As a consequence, as illustrated in FIG. 15, it is possible to manufacture a three-dimensional object including the three-dimensional object body 156 formed so that the internal space 157 communicates with an exterior through the opening 158 by depositing the formed layer formed by irradiating the supplied powder P with the laser beam L to sinter or melt and solidify at least a part of the powder P, the closed parts 161 and 162 that close the opening 158 by melting and solidifying the formed layer of the opening 158, and the covering part 163 formed to cover the closed parts 161 and 162 by depositing the formed layer formed by irradiating the supplied powder P with the laser beam L to sinter or melt and solidify at least a part of the powder P.

As described above, the three-dimensional deposition method of the present embodiment includes: a step of supplying the powder P toward the outer peripheral surface 96 of the shaft 95, irradiating the powder P with the laser beam L, and sintering or melting and solidifying at least a part of the powder P irradiated with the laser beam L to form a formed layer, so as to form the three-dimensional object body 156 in which the internal space 157 communicates with an exterior through the opening 158; a step of discharging a residue such as the powder P in the internal space 157 from the opening 158 to an exterior; and a step of emitting the laser beam L toward the end surface of the opening 158 to melt and solidify the formed layer, so as to close the opening 158.

When the formed layer is formed on the outer peripheral surface 96 of the shaft 95 to form the three-dimensional object body 156 in which the internal space 157 communicates with an exterior through the opening 158, even though the powder P enters the internal space 157, a residue such as the powder P in the internal space 157 is discharged from the opening 158 to an exterior and then the formed layer of the opening 158 is melted and solidified to close the opening 158, so that it is possible to manufacture a three-dimensional object having a hollow shape in which there is no residue such as the powder P in the internal space 157. That is, when the opening 158 is closed, the formed layer of the opening 158 is melted and solidified to close the opening 158 without using the powder P, so that the powder P and the like are prevented from entering the internal space 157. As a consequence, it is possible to improve the quality of the three-dimensional object having a hollow shape.

The three-dimensional deposition method of the present embodiment includes a step of, after the three-dimensional object body 156 is formed, supplying the powder P toward the end surface of the opening 158, irradiating the powder P with the laser beam L, and sintering or melting and solidifying at least a part of the powder P irradiated with the laser beam L to form a formed layer, so as to form the lid part 159 for closing the opening 158 on the end surface of the opening 158. After a residue such as the powder P in the internal space 157 is discharged from the opening 158 to an exterior, the laser beam L is emitted toward the lid part 159 to melt and solidify the lid part 159, so as to close the opening 158. Therefore, it is possible to properly close the opening 158 without using the powder P.

In the three-dimensional deposition method of the present embodiment, the gap 160 having a predetermined length is formed between the end surface of the opening 158 and the lid part 159, and the laser beam L is emitted toward the gap 160 to melt and solidify the formed layer, so as to close the gap 160. Therefore, it is possible to effectively close the gap 160 by melting and solidifying the lid part 159 in the vicinity of the gap 160 by the laser beam L.

In the three-dimensional deposition method of the present embodiment, the gap 160 having a predetermined length is formed between the end surface of the opening 158 and the lid part 159, and the laser beam L is emitted toward the lid part 159 to melt and solidify the formed layer, so as to close the gap 160. Therefore, it is possible to effectively close the gap 160 by melting and solidifying the lid part 159 by the laser beam L.

In the three-dimensional deposition method of the present embodiment, the three-dimensional object body 156 includes the first wall part 151 and the second wall part 152 formed by depositing a formed layer on the outer peripheral surface 96 of the shaft 95, the internal space 157 is formed by the first wall part 151 and the second wall part 152, and the opening 158 is formed by the end of the first wall part 151 and the end of the second wall part 152. Therefore, it is possible to simplify the manufacturing of a three-dimensional object and reduce the weight of the three-dimensional object.

In the three-dimensional deposition method of the present embodiment, a residue such as the powder P in the internal space 157 is discharged from the opening 158 to an exterior by rotating the shaft 95 or supplying gas from the opening 158 to the internal space 157. Therefore, it is possible to easily discharge a residue such as the powder P in the internal space 157 from the opening 158 to an exterior.

In the three-dimensional deposition method of the present embodiment, after the formed layer of the opening 158 is melted and solidified and the opening 158 is closed, the powder P is supplied toward the closed parts 161 and 162 of the opening 158 and is irradiated with the laser beam L, and at least a part of the powder P irradiated with the laser beam L is sintered or melted and solidified to form a formed layer, so as to form the covering part 163. Therefore, the closed parts 161 and 162 of the opening 158 are covered with the covering part 163, so that it is possible to improve appearance quality.

Furthermore, the three-dimensional object of the present embodiment includes the three-dimensional object body 156 formed so that the internal space 157 communicates with an exterior through the opening 158 by depositing a formed layer formed by irradiating the powder P with the laser beam L to sinter or melt and solidify at least a part of the powder P, the closed parts 161 and 162 that close the opening 158 by melting and solidifying the formed layer of the opening 158, and the covering part 163 formed to cover the closed parts 161 and 162 by depositing a formed layer formed by irradiating the supplied powder P with the laser beam L to sinter or melt and solidify at least a part of the powder P.

Therefore, the formed layer of the opening 158 of the three-dimensional object body 156 is closed by the melted and solidified closed parts 161 and 162, so that the powder P and the like are prevented from entering the internal space 157. As a consequence, it is possible to improve the quality of a three-dimensional object having a hollow shape.

Additionally, in the aforementioned embodiment, an object to be processed is the shaft 95 and three-dimensional deposition is performed while the shaft 95 is rotated; however, the object to be processed is not limited to the shaft 95 and a three-dimensional object having a hollow shape may be manufactured by rotation or movement.

Furthermore, in the aforementioned embodiment, the powder material injected by the powder supply unit is a metallic powder material; however, a non-metallic powder material such as a resin powder material may be used. Furthermore, the laser beam is used as a light beam; however, an electron beam or the like may be used.

### Reference Signs List

- 1: three-dimensional deposition device
- 2: three-dimensional deposition chamber
- 3: spare chamber
- 4: deposition head accommodation chamber
- 4a, 5a: Z-axis slide unit
- 5: machining unit accommodation chamber
- 6, 7: door
- 10: bed
- 11: table unit
- 12: deposition head
- 13: machining unit
- 15: Y-axis slide unit
- 16: X-axis slide unit
- 17: rotation table unit
- 17a: fixing base
- 17b: rotation table
- 17c: inclination table
- 17d: rotation table
- 18, 19: bellows
- 20: control device
- 22: tool
- 23: nozzle
- 24: front end
- 25: air discharge unit
- 30: shape measurement unit
- 31: heating head
- 32: device measurement unit
- 33: tool exchange unit
- 34: nozzle exchange unit
- 35: powder introduction unit
- 36: base movement unit
- 37: air discharge unit
- 38: gas introduction unit
- 39: powder collection unit
- 41: outer tube
- 42: inner tube
- 43: powder passage
- 44: laser path
- 45: nozzle injection opening
- 46: main body
- 47: light source
- 48: optical fiber
- 49: light concentrating unit
- 51: input unit
- 52: controller
- 53: storage unit
- 54: output unit
- 55: communication unit
- 90: object to be processed
- 91: working surface
- 92: formed layer
- 95: shaft
- 96: outer peripheral surface
- 100: base unit
- 102, 104, 106, 108: arrow
- 110: rotation shaft
- 151: first wall part
- 151a: end surface
- 152: second wall part
- 153: base portion
- 154: intermediate portion
- 155: front end
- 155a: end surface
- 156: three-dimensional object body
- 157: internal space
- 158: opening
- 159: lid part
- 160: gap
- 161, 162: closed part
- 163: covering part
- F: focal point
- L: laser beam (light beam)
- M1: movement direction
- M2: processing direction
- O, O1: central axis
- P: powder

## Claims

1. A three-dimensional deposition method of forming a three-dimensional object having a hollow shape by depositing a formed layer on an object to be processed, the three-dimensional deposition method comprising:
a step of supplying a powder material toward a working surface of the object to be processed, irradiating the powder material with a light beam, and sintering or melting and solidifying at least a part of the powder material irradiated with the light beam to form the formed layer, so as to form a three-dimensional object body in which an internal space communicates with an exterior through an opening;
a step of discharging a residue in the internal space from the opening to an exterior; and
a step of emitting the light beam toward an end surface of the opening to melt and solidify the formed layer, so as to close the opening.

2. The three-dimensional deposition method according to claim 1, further comprising:
a step of, after the three-dimensional object body is formed, supplying the powder material toward the end surface of the opening, irradiating the powder material with the light beam, and sintering or melting and solidifying at least a part of the powder material irradiated with the light beam to form the formed layer, so as to form a lid part for closing the opening on the end surface of the opening, wherein
after a residue in the internal space is discharged from the opening to an exterior, the light beam is emitted toward the lid part to melt and solidify the lid part, so as to close the opening.

3. The three-dimensional deposition method according to claim 2, wherein a gap having a predetermined length is formed between the end surface of the opening and the lid part, and emitting the light beam toward the gap to melt and solidify the formed layer, so as to close the gap.

4. The three-dimensional deposition method according to claim 2, wherein a gap having a predetermined length is formed between the end surface of the opening and the lid part, and emitting the light beam toward the lid part to melt and solidify the formed layer, so as to close the gap.

5. The three-dimensional deposition method according to any one of claims 1 to 4, wherein the three-dimensional object body includes a first wall part and a second wall part formed by depositing the formed layer on the working surface of the object to be processed, the internal space is formed by the first wall part and the second wall part, and the opening is formed by an end of the first wall part and an end of the second wall part.

6. The three-dimensional deposition method according to any one of claims 1 to 5, wherein discharging the residue in the internal space from the opening to an exterior by rotating the object to be processed or supplying gas from the opening to the internal space.

7. The three-dimensional deposition method according to any one of claims 1 to 6, wherein after the formed layer of the opening is melted and solidified and the opening is closed, supplying the powder material toward a closed part of the opening and irradiating the powder material with the light beam, and sintering or melting and solidifying at least a part of the powder material irradiated with the light beam to form a formed layer, so as to form a covering part.

8. A three-dimensional object comprising:
a three-dimensional object body formed so that an internal space communicates with an exterior through an opening by depositing a formed layer formed by irradiating a supplied powder material with a light beam to sinter or melt and solidify at least a part of the powder material;
a closed part that closes the opening by melting and solidifying the formed layer of the opening; and
a covering part formed to cover the closed part by depositing the formed layer formed by irradiating the supplied powder material with the light beam to sinter or melt and solidify at least a part of the powder material.
